(19) **Europäisches Patentamt / European Patent Office / Office européen des brevets**

(11) **EP 2 545 220 B1**

(12) **EUROPEAN PATENT SPECIFICATION**

(45) Date of publication and mention
of the grant of the patent:
**10.02.2016 Bulletin 2016/06**

(51) Int Cl.:
***G08G 1/02*** *(2006.01)*

(21) Application number: **11709761.8**

(22) Date of filing: **03.03.2011**

(86) International application number:
**PCT/GB2011/000289**

(87) International publication number:
**WO 2011/110800 (15.09.2011 Gazette 2011/37)**

(54) **IMPROVED ROAD STUDS**

VERBESSERTE STRASSENNÄGEL

PLOTS ROUTIERS AMÉLIORÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2010 GB 201003908**

(43) Date of publication of application:
**16.01.2013 Bulletin 2013/03**

(60) Divisional application:
**15202180.4**

(73) Proprietor: **Clearview Traffic Group Limited
Bicester, Oxfordshire OX26 4LD (GB)**

(72) Inventor: **DICKS, Martin
East Sussex TN34 2AR (GB)**

(74) Representative: **Boult Wade Tennant
Verulam Gardens
70 Gray's Inn Road
London WC1X 8BT (GB)**

(56) References cited:
**EP-A1- 0 578 413          JP-A- 2009 009 604
US-A1- 2005 238 425**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

FIELD OF THE INVENTION

The present invention relates to road studs for disposal in a road surface.

BACKGROUND OF THE INVENTION

Road studs may be embedded in a road surface to clearly delineate lanes on the road during darkness. Road studs may generally be classed as "active" or "passive".

Passive road studs, or cat's eyes, simply provide a reflective function so as to reflect a vehicle's headlights back to the vehicle's driver. No power is required by passive road studs, but only a few such road studs are visible on the road ahead due to the requirement for a vehicle's headlights to fall upon each road stud for it to be visible to a driver.

In contrast, active road studs as disclosed in EP0578413A and JP2009009604A incorporate LEDs, for example, which act as a light source for drivers even in the absence of a vehicle's direct headlights on the road stud. Thus, active road studs can delineate road lanes much further ahead of a vehicle than is possible using passive road studs. Nonetheless, a power source is required to power the LEDs in active road studs. For example, active road studs may be internally-powered (e.g. solar-powered) or externally powered (e.g. hard-wired).

It would be desirable for internally-powered, active road studs to be able to operate during periods of poor daytime visibility, as well as at night time. However, a number of factors make this difficult to achieve, not least the power availability within the road stud: a number of days of poor daytime visibility might draw a considerable amount of power from the road stud, potentially leading to the road stud being non-operational at night time, which would clearly be undesirable.

It would also be desirable to provide enhanced functionality to road studs, including vehicle detection, measurement of vehicle speed, monitoring visibility, monitoring the condition of the road surface, vehicle type identification, and the detection of rain and fog.

It would also be desirable to provide methods of reducing the power consumption by active road studs, particularly those that are internally-powered.

It would also be desirable to provide an improved retro-reflector suitable for use in a flush road stud.

The present invention seeks to provide road studs and associated methods which are particularly suited to use in conditions of poor daytime visibility as well as at night time.

SUMMARY OF THE INVENTION

At night time vehicles have their headlights and rear lights switched on. Similarly, vehicle lights are generally switched on in periods of poor daytime visibility. The present invention uses the light emitted by vehicles to provide enhanced functionality to road studs, as described below.

According to the present invention, as defined in independent claim 1, there is provided a road stud for disposal in a road surface. The road stud comprises an optical input, an optical output, a light modification component, and a microprocessor. The optical input is for receiving incoming light from a vehicle on the road surface. The optical output is for directing light out of the road stud in a predetermined output direction. The light modification component is operable to modify incoming light as it passes along a light path from the optical input to the optical output. The microprocessor is operable to control the light modification component, thereby enabling the road stud to send an outgoing optical communication signal in the predetermined output direction when the road stud is illuminated by incoming light from a vehicle.

Thus, the invention enables outward optical communication from road studs by making use of the light from passing vehicles (e.g. headlights). Thus, the incoming light signal need only be modified to provide an outgoing communication signal, which ensures that the power requirements for such communication is very low, such that this communication method may be used by internally-powered road studs (e.g. solar road studs) without drawing significant amounts of power away from the primary illumination function of such road studs.

In an advantageous embodiment, the light modification component is an interrupt component operable to alternately prevent and allow the passage of incoming light along the light path from the optical input to the optical output, thereby enabling the road stud to send a digital optical communication signal in the predetermined output direction. The sending of digital "on/off" type communication signals is advantageous as it makes the signals more robust to decoding at the other end (i.e. there is more difference between a full signal and no signal than there is between a full signal and a part signal, so there is less chance of decoding errors. More advantageously, the interrupt component comprises a piezoelectric element coupled to an optical element disposed in the light path. The piezoelectric element is operable to move the optical element in response to electrical signals from the microprocessor. The optical element is moveable to alternately prevent and allow the passage of incoming light along the light path from the optical input to the optical output. This embodiment provides a particularly efficient and effective way of implementing the invention.

In an advantageous embodiment, the road stud further comprises a light sensor arranged to sense an incoming optical communication signal. This enables the road stud to receive as well as send optical communication signals. More advantageously, the road stud is arranged to receive the incoming optical communication signal from a predetermined input direction. Still more advantageously, the predetermined input direction is substantially coincident with the predetermined output direction. This enables two-way optical communication between two such road studs disposed at spaced locations in the road surface.

In an advantageous embodiment, the road stud comprises a plurality of optical inputs for receiving incoming light from vehicles on the road surface. For example, the road stud may have one optical input pointing along the road towards vehicles travelling in one direction, and one optical input pointing along the road towards vehicles travelling in the other direction. Thus, it becomes possible for the road stud to differentiate between vehicles moving in the two directions, and such information may be included in the optical communication signal if desired.

In an advantageous embodiment, the road stud comprises a plurality of optical outputs for directing light out of the road stud in a plurality of respective predetermined output directions. For example, the road stud may have one optical output directed towards an adjacent road stud in one direction along the road, and one optical input directed towards an adjacent road stud in the other direction along the road. Thus, the road stud may send optical communications signals in either direction along the road. It would also be possible for the road stud to have an optical output pointing towards a roadside data collection box with the capacity to store more information than the road stud itself.

In one advantageous embodiment, the light sensor may comprise one of a photodiode, a phototransistor, a photoresistor, and a solar/photovoltaic cell.

In one advantageous embodiment, the light source may comprise one or more light emitting diodes.

In one advantageous embodiment, the road stud may further comprise a power supply (e.g. battery/photovoltaic cell for powering the microprocessor, etc.).

In one advantageous embodiment, the road stud may further comprise a data storage device (e.g. a memory).

Other preferred features of the present invention are set out in the dependent claims.

BRIEF DESCRIPTION OF THE DRAWINGS

Embodiments of the present invention will now be described by way of example with reference to the accompanying drawings in which:

Figure 1 schematically illustrates a road stud in accordance with an embodiment of the present invention;
Figure 2 is a graph illustrating the headlight intensity of a passing car, as measured by a road stud in the road surface;
Figure 3 is a cross-sectional schematic illustration of a corner cube retro-reflector used in one embodiment of the present invention;
Figure 4 is a cross-sectional schematic illustration of a bi-convex lens retro-reflector used in one embodiment of the present invention;
Figure 5 is a schematic illustration of an optical communication system within the road stud;
Figure 6 shows a car travelling along a road surface towards two road studs embedded in the road surface;
Figure 7 shows the headlight intensity profiles as seen by each of the road studs in Figure 6 as the car goes by;
Figure 8 shows a headlight intensity profile as seen by a road stud when there is a pot hole in the road surface near the road stud;
Figure 9 shows a car moving past a road stud embedded in the road surface;
Figure 10 shows the headlight and rearlight intensity profiles as seen by the road stud in Figure 9 as the car goes by;
Figure 11 schematically illustrates a road stud in accordance with an embodiment of the present invention ;
Figure 12 schematically illustrates a lens for use in the road stud;
Figure 13 schematically illustrates the refraction/reflection of air at an interface between two regions of different refractive index in three situations; and
Figure 14 schematically illustrates a light sensor for sensing reflected and/or refracted light from the lens of Figure 12.

DETAILED DESCRIPTION OF A PREFERRED EMBODIMENT

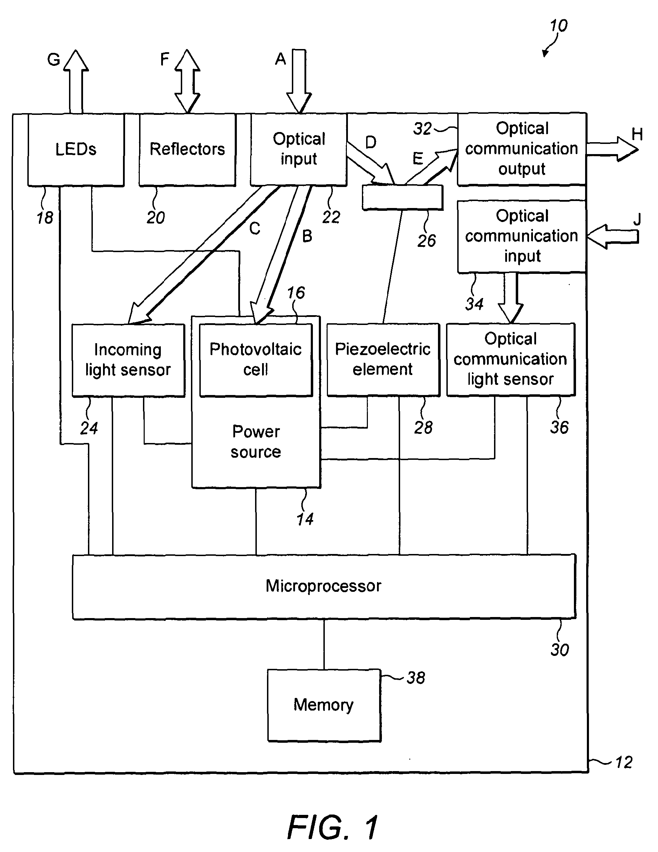

Figure 1 shows a road stud 10. The road stud 10 comprises a housing 12 for disposal in a road surface (not shown). The housing 12 incorporates or encloses various components, such as a power source 14 comprising a solar cell or photovoltaic cell 16, one or more light sources such as LEDs 18, one or more reflectors 20, an optical input 22, an incoming light detection means or light sensor 24, a reflector 26, a piezoelectric element 28, a microprocessor 30, an optical communication output 32, an optical communication input 34, an optical communication light sensor 36 and a data storage device such as memory 38. In Figure 1, all solid arrows schematically illustrate light paths.

The optical input 22 is arranged to receive external light (shown by arrow A) such as sunlight, vehicle light, and/or light from other light sources external to the road stud 10. Some of the external light is directed towards the photovoltaic cell 16 of the power source 14, as shown by arrow B, so as to charge the power source 14. The power source 14 is controlled by the microprocessor 30. The microprocessor 30 is powered by the power source 14.

Some of the external light received by the optical input 22 is directed towards the incoming light sensor 24, as shown by arrow C. Thus, the incoming light sensor 24 is arranged to sense incoming external light and to output associated sensed light data to the microprocessor 30. The incoming light sensor 24 may be powered by the power source 14.

Some of the external light received by the optical input 22 is directed towards the reflector 26, as shown by arrow D. The reflector 26 is moveable by means of the piezoelectric element 28 which is controlled by the microprocessor 30. The piezoelectric element 28 may be powered by the power source 14. Thus, using the piezoelectric element 28 and the microprocessor 30, it is possible to control the path of light reflected by the reflector 26, as shown by arrow E. The reflector 26 and associated optical communication components will be described in more detail in the "Optical communication between road studs" section below.

The reflectors 20 are arranged to at least partially reflect incoming external light back in the incoming light direction so that the light returns to its source, as shown by arrow F. Such reflectors 20 may be described as retro-reflectors.

The LEDs 18 are arranged to emit light from the road stud 10, as shown by arrow G. The LEDs 18 are powered by the power source 14 and are controlled by the microprocessor 30.

The memory 38 is coupled to the microprocessor 30 to enable the storage of raw data sent to the microprocessor 30 by internal sensors (e.g. light sensors 24 and 36), or to enable the storage of processed data. x. In other words, the memory 38 is operable to store data that has been sensed, generated and/or received by the road stud 10.

Optical vehicle detection

The optical input 22 of the road stud 10 is arranged to receive light from vehicles moving along the road surface in which the road stud 10 is placed. The optical input 22 receives light primarily from the headlights of approaching vehicles. Light from vehicle indicators, brake lights and rear lights may also be received by the optical input 22.

As mentioned above, some of the light received by the optical input 22 is directed towards the incoming light sensor 24, as shown by arrow C. The incoming light sensor 24 may include a photodiode, a phototransistor, a photoresistor, or a photovoltaic cell, for example. The incoming light sensor 24 is able to output sensed light data to the microprocessor 30. The microprocessor 30 processes the sensed light data so as to identify vehicle headlights.

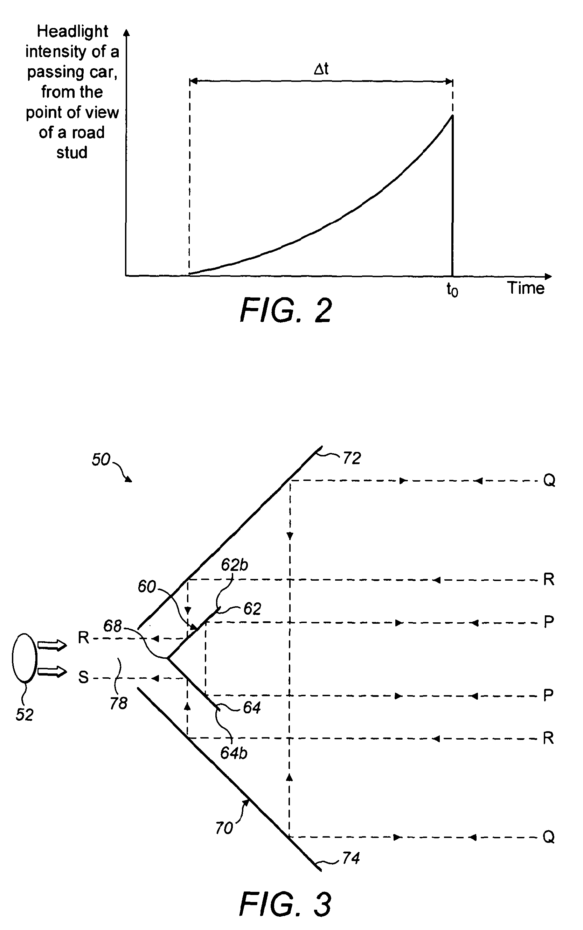

The microprocessor 30 processing may take into account factors such as the colour and intensity of the sensed light. In addition, the processing may take into account the variation of the sensed light data over time. For example, in cases of moving traffic, the intensity of the sensed light signal from vehicle headlights would tend to increase steadily over time to a maximum, and then to drop off sharply once the front of the vehicle has passed beyond the road stud, as shown in Figure 2. Also, vehicle headlights tend to exhibit "ringing" whereby the light signal includes a high frequency oscillation due to vibrations of the vehicle. The microprocessor 30 therefore includes processing algorithms suitable for identifying vehicles based on the sensed light data from the incoming light sensor 24. Having identified a vehicle, the microprocessor 30 may save vehicle detection data in the memory 38, or may use the vehicle detection data to trigger other functionality within the road stud 10.

Thus, the road stud 10 enables the headlights from approaching vehicles to be monitored, thereby enabling the detection of vehicles with their lights on. It should be noted that the detection of vehicles with their lights on would generally be indicative of night time conditions or poor daytime visibility. Thus, if the road stud 10 includes a clock (not shown), the microprocessor is able to distinguish night time headlight usage from daytime headlight usage, thereby enabling the identification of periods of poor daytime visibility.

At night, the LEDs 18 are usually used to emit light from the road stud 10 so as to illuminate the road stud 10, thereby enabling a number of road studs to clearly delineate road lanes in the dark. However, using the vehicle detection data described above, it would be possible to reduce the power drawn by the LEDs during the hours of darkness when no vehicles have been detected for a given period of time. This reduction in power consumption by the LEDs could be effected by a reduction of say 30-40% in the intensity of the light emitted by the LEDs. Alternatively/additionally, the reduction in power consumption by the LEDs could be effected by a reduction in the LED operating frequency (e.g. from a normal operating frequency of around 130Hz to a fixed operating frequency of around 100 Hz). These changes would be controlled by the microprocessor 30. Such changes would not be perceived by the human eye, so the road stud 10 would still be visible to drivers from long distances away. As soon as vehicle headlights are detected again (from up to 200 meters away), the microprocessor would increase the LED power consumption back to the original settings.

During the daytime, the LEDs 18 in a internally-powered road stud would generally tend to be switched off to conserve power. However, the above power-saving measures in the present road stud 10 make it possible to additionally switch on the LEDs 18 in periods of poor daytime visibility. Such periods of poor daytime visibility may be identified by the microprocessor 30 using the vehicle detection data in combination with a clock signal, as described above.

Combining reflected and emitted light

At present, there is no requirement for a reflective element on an active road stud in the UK. Some road studs are available with both active and reflective elements, but the reflective elements tend to be too small to provide much illumination of the road stud to drivers. Thus, at present in the UK, there is very little illumination provided by self-powered active road studs in periods of poor daytime visibility (since, as mentioned above, the active elements of such road studs tend to be switched off during the daytime to conserve energy).

The present road stud 10 uses active LEDs 18 in combination with a considerably larger reflector 20 than is found on currently available active road studs. Thus, there will be times when the reflective element provides a considerable amount of illumination of the road stud 10 to drivers. In such situations, it would be possible to reduce the amount of illumination provided by the LEDs with no degradation in visibility to drivers. Thus, by taking account of reflected light, it is possible to reduce the amount of power used by the LEDs 18 when there is more incoming light to the road stud, in order for the road stud to provide a specified amount of light output.

As described above, the incoming light sensor 24 is arranged to sense an amount of incoming light from a vehicle on the road surface. Thus, the sensed light data sent to the microprocessor 30 includes information about the amount of incoming light (e.g. information regarding brightness, intensity, luminance of incoming light). Based on the received sensed light data, the microprocessor 30 is able to adjust the amount of light emitted by the LEDs 18 so as to control the amount of the combined reflected and emitted outgoing light from the road stud 10. In this sense, the reflectors 20 and LEDs 18 may be considered as a single light source operable to output a constant amount of light to drivers (see arrows F and G in Figure 1). In other words, the reflectors 20 and the LEDs 18 are sufficiently close together that the reflected outgoing light (arrow F) and the emitted outgoing light (arrow G) are together viewed as a single light source by a driver of a vehicle on the road surface.

It is possible that regulations may change with regard to the required colour use of reflectors and active road studs. For example, it may be required that different colours of light be emitted by road studs at different times of the day and night. To combat this change, a similar methodology may be used to control the colour of the light emitted jointly by the LEDs 18 and the reflectors 20 as was described above with regard to controlling the amount of jointly emitted light. Colour control would be necessary depending on the colour of vehicle headlights reflected back to the driver (most headlights are white/yellow, but some headlights are blue).

In order to control the colour of the outgoing light from the road stud 10, the incoming light sensor 24 is arranged to sense a light colour. Thus, the sensed light data sent to the microprocessor 30 includes information about the colour of the incoming light. In order to control the colour of the outgoing light, the LEDs 18 are colour-variable (e.g. RGB LEDs). Based on the received sensed light data, the microprocessor 30 is able to adjust the colour of light emitted by the LEDs 18 so as to control the colour of the combined reflected and emitted outgoing light from the road stud 10.

It will be appreciated that it would be possible to sense the amount and/or colour of the outgoing light from both the LEDs 18 and the reflectors 20 rather than sensing the amount and/or colour of the incoming light. Based on such data, the microprocessor 30 would still be able to use a feedback loop to control the amount and/or colour of the combined reflected and emitted outgoing light from the road stud 10.

Corner cube retro-reflector

One way of combining reflected and emitted light into effectively a single outgoing light source as described above is to use the modified corner cube reflector 50 shown in Figure 3 in combination with a light source such as LEDs 52.

Corner cube reflectors are known retro-reflectors consisting of three mutually perpendicular, intersecting flat surfaces which reflect light back towards the source, regardless of the direction of incidence. The three intersecting surfaces together form the corner of a cube, which gives the reflector its name.

The modified corner cube reflector 50 shown in Figure 3 includes a small corner cube reflector 60 and a large corner cube reflector 70. The small corner cube reflector is smaller than the large corner cube reflector.

The small corner cube reflector 60 comprises three mutually perpendicular flat surfaces 62, 64 and 66, although it should be noted that only two of the surfaces 62 and 64 are shown in the cross-sectional view of Figure 3. The three mutually perpendicular flat surfaces intersect at a point 68. The three mutually perpendicular flat surfaces 62, 64 and 66 are arranged to reflect incoming light back in the incoming light direction, as shown by exemplary light rays P. The three mutually perpendicular flat surfaces 62, 64 and 66 are reflective on both sides.

The large corner cube reflector 70 comprises another three mutually perpendicular flat surfaces 72, 74 and 76, although again it should be noted that only two of the surfaces 72 and 74 are shown in the cross-sectional view of Figure 3. In contrast to the small corner cube reflector 60, the large corner cube reflector 70 has an aperture 78 where the three mutually perpendicular flat surfaces 72, 74 and 76 would normally meet. The three mutually perpendicular flat surfaces 72, 74 and 76 are arranged to reflect some of the incoming light back in the incoming light direction, as shown by exemplary light rays Q.

The small corner cube reflector 60 is disposed within the large corner cube reflector 70, spaced from the large corner cube reflector 70 such that there is a gap 54 between the rear reflective surfaces 62b, 64b and 66b of the small corner cube reflector 60 and the front reflective surfaces 72, 74 and 76 of the large corner cube reflector 70. The small corner cube reflector 60 is disposed in front of the aperture 78 of the large corner cube reflector 70.

Some light incident on the reflector 50 is reflected back in the incoming light direction by the small and large corner cube reflectors 60 and 70 (see again exemplary light rays P and Q), but the remainder of the incoming light is reflected between the small and large corner cube reflectors 60 and 70 until it passes through the aperture 78 at the back apex of the large corner cube reflector 70. In particular, exemplary light ray R in Figure 3 shows some incoming light incident on one of the reflective surfaces 72 of the large corner cube reflector 70. The light is reflected by the reflective surface 72 towards a back reflective surface 62b of the small corner cube reflector 60. There may be multiple reflections between the reflective surface 72 of the large corner cube reflector 70 and the reflective surface 62b of the large corner cube reflector 60 (although only one pair of reflections in seen for exemplary light ray R in Figure 3) until the light passes out of the back of the reflector 50 via the aperture 78 at the apex of the large corner cube reflector 70. Exemplary light ray S in Figure 3 is similar to exemplary light ray R, but light ray S is reflected between the surfaces 74 and 64b rather than the surfaces 72 and 62b.

Dependent on

    (a) the size of the aperture 78;
    (b) the size of the small corner cube 60 reflector as compared to the size of the aperture 78; and
    (c) the gap 54 between the small and large corner cube reflectors 60 and 70;

it is possible that some light reflected between the front reflective surfaces 72 and 74 of the large corner cube reflector 70 and the back reflective surfaces 62b and 64b of the small corner cube reflector 60 may be reflected back out of the reflector 50 in the incident direction rather than passing through the aperture 78. Nonetheless, some of the incident light will be reflected by the reflector 50 and the remainder of the incident light will pass through the aperture 78.

In addition, factors (a)-(c) above also dictate the number of reflections which are likely to occur between the small and large corner cube reflectors 60 and 70. For example, a small aperture 78 and a small gap 54 in combination with a relatively large small corner cube reflector 60 would result in a large number of reflections between the small and large corner cube reflectors 60 and 70 for light passing through the aperture 78. In contrast a large aperture 78 and a large gap 54 in combination with a relatively small small corner cube reflector 60 would result in a small number of reflections between the small and large corner cube reflectors 60 and 70 for light passing through the aperture 78.

The relative amounts of incoming light which are reflected by the reflector 50 and transmitted through the aperture 78 are also dependent on the geometrical factors (a)-(c) above, as well as on a further factor:

    (d) the size of the large corner cube reflector 70 as compared to the size of the small corner cube 60 reflector.

The incoming light which does eventually pass through the aperture 78 may be directed (e.g. by means of a lens, or other optical components) towards a photovoltaic cell and/or a light sensor (not shown in Figure 3). Some of the incoming light may be directed towards a light sensor, such as the incoming light sensor 24 in Figure 1, and then be used to collect incoming light data. Some of the incoming light may be used to charge a photovoltaic cell, such as the photovoltaic cell 16 shown in Figure 1. Thus, as compared to a normal solar road stud, additional light is collected from passing vehicles and directed towards the solar collection device. Circular flexible solar panels may be placed beneath the existing solar panels, with light being directed from both headlights and solar energy onto the panels.

In order to combine the light reflected by the reflector 50 with light emitted by a light source into effectively a single light source for viewing by road users, one or more LEDs 52 may be disposed behind the reflector 50 and arranged to emit light through the aperture 78 of the large corner cube reflector 70. Such emitted light will be reflected between the back surfaces 62b and 64b of the small corner cube reflector 60 and the front surfaces 72 and 74 of the large corner cube reflector until the light is emitted from the reflector 50.

The reflector 50 enables the same element to detect, reflect and emit light. Thus, light output by the reflector will be perceived as a constant output source by road users. Therefore, as described in the previous section, emitted light can be reduced when light from vehicle headlights is present and of enough intensity to meet the product requirements.

If the road stud 10 of Figure 1 incorporates the reflector 50, then the reflectors 20 of Figure 1 may correspond to the small and large corner cube reflectors 60 and 70. Similarly, the LEDs 18 of Figure 1 may correspond to the LEDs 52. Also, the optical input 22 of Figure 1 may correspond to the aperture 78 in the large corner cube reflector 70. Thus, although the LEDs 18, the reflectors 20 and the optical input 22 have been depicted separately in Figure 1, it is possible that these elements could be integrated with one another, to a greater or lesser degree.

The reflector/LED arrangement of Figure 3 is one example of an effective way to combine reflected and emitted light. Many other options are available, such as using fibre optics to direct light from a light source towards a reflector array. Another example would use multiple light collectors having the external appearance of LEDs to collect light and direct it along a light path allowing collected light to be returned along the same path and emitted at the same angle as incoming light.

Light from a light source could be combined with the collected light at some point during the light path such that the collected (i.e. reflected) and emitted light together form a single light source for road users.

Bi-convex lens retro-reflector

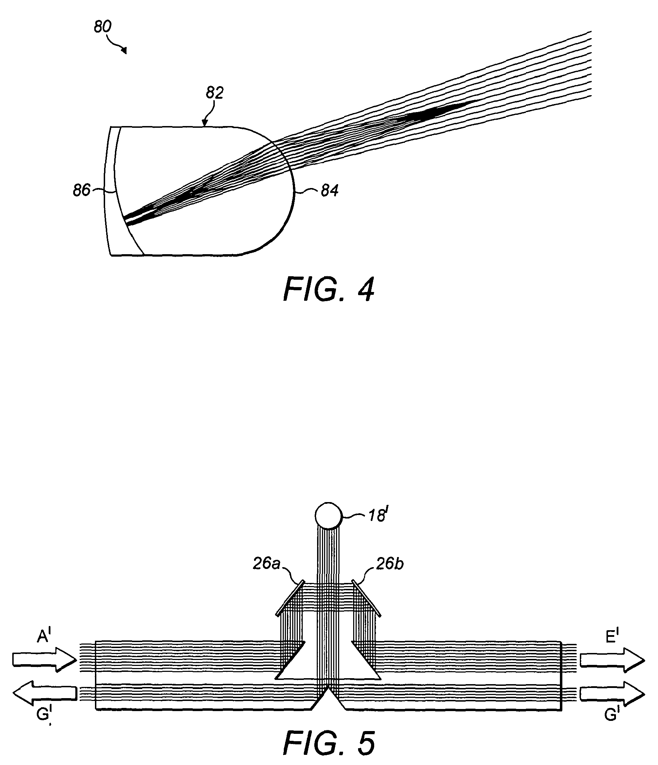

Another new type of road stud reflector is shown in Figure 4. The reflector 80 of Figure 4 is suitable for use in a so-called "flush road stud" which is disposed in a road surface with the top of the road stud being aligned substantially flush with the road surface. The reflector 80 could be used as one or more of the reflectors 20 in the road stud of Figure 1.

The reflector 80 comprises a biconvex lens 82 which has first and second convex surfaces 84 and 86. The first convex surface 84 of the lens 82 may form part of the top surface of the flush road stud. The first convex surface 84 is a transmissive surface arranged to receive incoming light from a vehicle on the road surface. The first convex surface 84 focuses incoming light through the lens 82 towards the second convex surface 86 of the lens 82. The second convex surface 86 is a reflective surface. This could be accomplished by providing a reflective coating on the outside of the lens 82 at the second convex surface 86. The second convex surface 86 reflects incoming light from the first convex surface 84 back towards the first convex surface 84 and back out through the lens 82 in the incoming light direction. Thus, the reflector 80 is a retro-reflector arranged to reflect incoming light back in the incoming light direction.

In practice, the size and focal length, etc. of the first convex surface 84 of the lens 82 may be defined by the existing radius of existing outer road stud lenses. The second convex surface 86 of the lens 82 may be created by placing a larger diameter lens within the road stud at the focal point to create the required reflection.

Optical communication between road studs

Returning to the road stud of Figure 1, as mentioned above, some of the external light received by the optical input 22 is directed towards the reflector 26, as shown by arrow D. The input light may be light which has passed through the aperture 78 in the reflector 50 shown in Figure 3. Alternatively, the optical input 22 may comprise optical components such as lenses, optical fibres, and/or light pipes, etc for receiving the incoming light.

The input light directed towards the reflector 26 is intended to be light from the headlights of a vehicle travelling along the road surface in which the road stud 10 is disposed. Thus, the optical input 22 is oriented to receive light from vehicles on the road surface (e.g. the optical input may be oriented preferentially at a shallow angle along the road surface in the direction of traffic flow). Advantageously, the road stud may comprise two optical inputs 22 arranged to receive light from vehicles travelling in both directions along the road surface: one optical input 22 oriented back towards the last road stud, and one optical input 22 directed forwards towards the next road stud as compared to the direction of travel of a vehicle along the road. This enables the road stud 10 to differentiate between incoming light from the two directions. However, for simplicity, Figure 1 only shows one optical input 22.

The reflector 26 is a planar reflector disposed within the housing 12 of the road stud 10. In the absence of external inputs, the reflector 26 is arranged to reflect incoming light from the optical input 22 (see arrow D) along a light path (see arrow E) towards the optical communication output 32. The optical communication output 32 directs received light (see arrow E) out of the road stud 10 (see arrow H) in a predetermined output direction. The predetermined output direction may be towards an adjacent road stud in the road surface. In this case, the predetermined output direction is likely to be along the road substantially parallel to the road surface. Advantageously, the road stud 10 may comprise two optical communication outputs 32 arranged to send optical communication signals in both directions along the road (i.e. to the adjacent studs in both directions). This enables the road stud 10 to communicate information both up and down the road. Alternatively/additionally, the predetermined output direction may be towards a data collection box disposed at the roadside. However, for simplicity, Figure 1 only shows a single optical communication output 32 with a single predetermined output direction.

Thus, the road stud 10 may direct a portion of any incoming light from vehicle headlights out of the road stud 10 in one or more predetermined output directions. This output light (see arrow H) may be considered as an optical communication signal or an optical data signal from the road stud 10. In the absence of any external forces acting on the reflector 26, the optical communication signal is "on" when there the optical input 22 receives incoming light from vehicle headlights, and the optical communication signal is "off" when there are no vehicles with their headlights on in the vicinity of the road stud 10.

In order to enable a greater amount of information to be communicated out of the road stud 10 via the optical communication signal (see arrow H), it is possible to move the reflector 26 such that it reflects light in a different direction. In other words, it is possible to adjust the orientation of the reflector 26 such that the reflected light, as shown by arrow E in Figure 1, is directed along a different light path which does not lead to the optical communication output 32. Thus, when the reflector 26 has been moved in this manner, no incoming light from vehicle headlights will reach the optical communication output 32, and the optical communication signal will be "off". Back and forth movement of the reflector 26 therefore makes it possible to send a digital (i.e. binary, "on/off", 0 or 1) optical communication signal (see arrow H) from the road stud 10 in the predetermined output direction. In one embodiment, the microprocessor 30 of the road stud 10 may be arranged to send a digital signal pulsing at a frequency of around 38kHz. Moreover, a vehicle travelling at 70mph may be expected to provide a light input to a road stud for a period of around two seconds. Thus, a significant amount of data may be sent to an adjacent road stud during a vehicle passing event.

The reflector 26 is moveable by means of the piezoelectric element 28 which is controlled by the microprocessor 30. In particular, the piezoelectric element moves the reflector 26 in response to electrical signals from the microprocessor 30. Thus, using the piezoelectric element 28 and the microprocessor 30, it is possible to control the path of light reflected by the reflector 26 such that incoming light either is or is not directed towards the optical communication output 32. This enables a digital on/off optical signal (see arrow H) to be sent from optical communication output 32 of the road stud 10 in the predetermined output direction when the road stud is illuminated by incoming light from a vehicle. In this sense, the reflector 26 and the piezoelectric element 28 may be considered as an "interrupter" which interrupts the light passing between the optical input 22 and the optical communication output 32. Thus, this road stud communication method uses the high powered light from passing vehicles and redirects it along a light path to the other side of the road stud 10 via an "interrupter".

Figure 5 schematically illustrates one embodiment of the light paths in and out of the "interrupter" contained within the road stud 10. Figure 5 is symmetric to illustrate the preferred embodiment in which light is received and emitted by the road stud both up and down the road. Thus, the road stud is able to receive light from and emit light to vehicles travelling in both directions along the road. Light from a vehicle's headlights (shown by arrow A') is passed to first and second reflectors 26a and 26b, at least one of which is moveable by an associated piezoelectric element (not shown in Figure 5). If the reflectors 26a and 26b are properly aligned, then a reflected beam of light (see arrow E') may be passed to an optical communication output (not shown in Figure 5) so as to emit an optical communication signal in a predetermined output direction. Also shown in Figure 5 is an LED 18' which emits light in both directions along the road (see arrows G').

It is contemplated that means other than the reflector 26 and the piezoelectric element 28 could be used to digitally modify the incoming light from vehicle headlights as it passes along the light path (see arrows D and E) from the optical input 22 to the optical communications output 32. In addition, rather than using a digital "on/off" type of optical communication signal (see arrow H), it would be possible to modify the strength of the signal in an analogue manner for communication purposes. However, this analogue communication option is less desirable than the digital communication option as it would be more prone to signal decoding errors.

The road stud 10 also includes the optical communication input 34 and the associated optical communication light sensor 36, as shown in Figure 1. The optical communication input 34 is arranged to receive an optical communication signal (see arrow J) emitted by an adjacent road stud. For example, the optical communication input 34 may be oriented and arranged so as to receive an optical signal (see arrow J) deriving from a direction along the road parallel to the road surface. Advantageously, the road stud 10 may comprise two optical communication inputs 34 arranged to receive optical communication signals (see arrow J) from both directions along the road (i.e. from the adjacent studs in both directions). This enables the road stud 10 to differentiate between information received from up and down the road. However, for simplicity, only one optical communication input 34 is shown in Figure 1. Any optical communication signal (see arrow J) received by the optical communication input 34 is sensed by the optical communication light sensor 36 which outputs sensed light data to the microprocessor 30 such that the optical communication signal may be decoded.

Thus, the road studs 10 described herein are capable of two-way communication (i.e. sending and receiving data). A line of such road studs along a road would enable information to be sent along the road in both directions. Information could also be sent off the road to a roadside data collection box at appropriate intervals if required. Since communications are effected optically, a line-of-sight is required between communication road studs 10. This should be feasible in most circumstances since road studs are generally positioned closer together at bends and the like. However, if a line-of-sight is not possible, the communication signal could be sent off-road to a roadside box and then back on-road to the next road stud by means of the roadside box.

The road stud 10 is capable of communicating information only when vehicle headlights are present, and will therefore only function at night and in poor weather conditions. It would be possible to additionally incorporate traditional RF or IR communication technologies. However, such communications technologies use much more power than the optical communication system using vehicle headlights, as described above. Therefore, due to power constraints, IR or RF communications would be used only in exceptional circumstances (e.g. if stationary traffic was present and the information needed to be communicated when headlights were not available).

There are numerous useful applications of a system of communicating road studs, a few of which are described below.

(a) Measuring vehicle speed

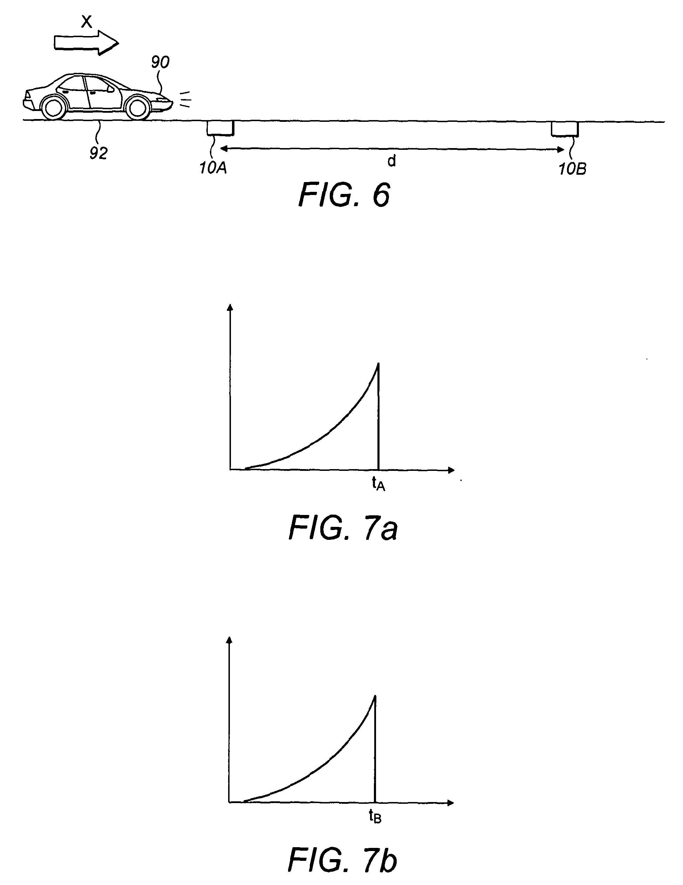

Figure 6 shows a car 90 with its headlights on travelling along a road surface 92 in the direction shown by arrow X. The car 90 is approaching two road studs 10A and 10B disposed in the road surface 92 a distance d apart.

Figures 7a and 7b show the headlight intensity profile detected by the road studs 10A and 10B respectively from the direction of approach of the car 90 (i.e. the -x direction). The maximum headlight intensity is detected at times and $t_A$ just as the front of the car passes over each of the road studs 10A and 10B respectively.

The speed $v$ of the car 90 is simply given by

$$\frac{d}{t_B - t_A}.$$

If each road stud 10A and 10B measures the light profile of the headlights as the car 90 passes by, then the times $t_A$ and $t_A$ may be recorded the road studs 10A and 10B respectively. Thus, the speed $v$ of the car may easily be calculated if the times $t_A$ and $t_A$ are passed between the two road studs 10A and 10B as part of the optical communication signals.

## (b) Monitoring visibility

Over an extended period of time, the road stud 10 may record headlight intensity profiles for a large number of passing vehicles. With reference to Figure 2, the period $\Delta t$ over which the vehicle headlights are detected will depend on the vehicle speed. However, given the vehicle speeds (calculated as described above), it is possible to normalise the received headlight intensity profiles with respect to vehicle speed so as to calculate an average headlight intensity profile. The brightness and range of vehicle headlights will vary somewhat from vehicle to vehicle, but given a large enough sample of passing vehicles with their headlights on, the average headlight intensity profile should be relatively stable.

If visibility is reduced (e.g. due to smoke, fog, sandstorm, etc.) then the period $\Delta t$ over which the vehicle headlights are detected will systematically decrease. Vehicle speeds are also likely to decrease in such circumstances. Thus, the road stud 10 may analyse sensed light data to detect extended periods of reduced visibility.

## (c) Monitoring the condition of the road surface

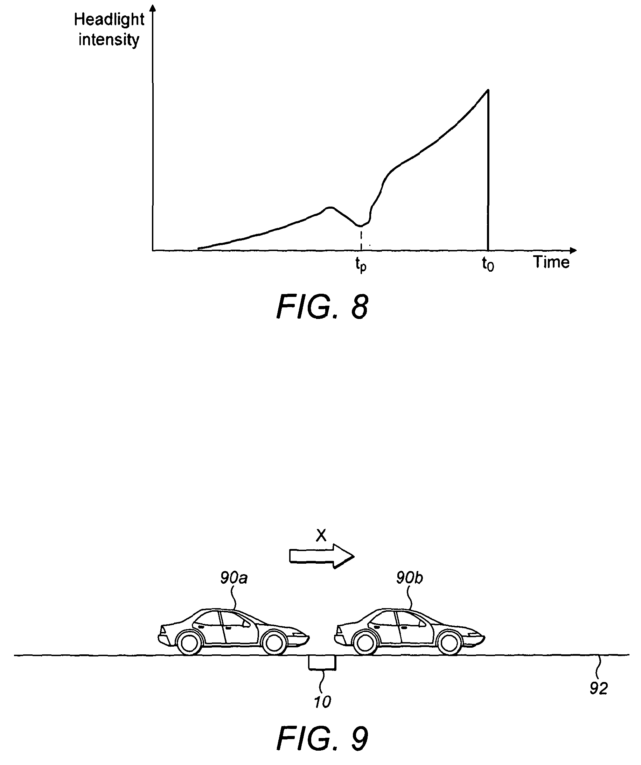

Similarly, there may be a systematic change in the headlight intensity profile if there is a pot hole or similar in the road surface. In this case, the headlight intensity profile may correspond to that shown in Figure 8, with a reduction in headlight intensity being detected at a time $t_\rho$ prior to the maximum detected intensity at $t_0$. If such a reduction in intensity is systematically detected over a number of vehicle headlight profiles, and if the reduction in intensity always occurs at the same distance from the road stud 10 (i.e. if $v(t_0 - t_p)$ is constant, where $v$ is the vehicle speed), then it is reasonable to assume that there is a problem with the road surface (e.g. a pot hole).

In one embodiment, a sample log of the approach information from vehicle headlights can be taken by the road stud 10. This data can be communicated off road and stored. Future information can be compared against the logged data on a daily basis by computer to establish if changes have taken place.

Thus, the road stud 10 may be used to monitor the condition of the road surface.

## (d) Vehicle type identification

With vehicle detection in operation within the road stud 10, the existence of passing vehicles can be gained and communicated to the next road stud which logs the information and calculates the speed of the vehicle. Once the vehicle's rear lights have passed the second road stud the vehicle length is calculated and logged and defined as type. This information can be passed along the studs if required and passed off road at an appropriate place.

For example, Figure 9 shows a vehicle 90 is shown with its headlights on travelling along a road surface 92 in the direction shown by arrow X. The vehicle 90 is shown in two positions during its journey.

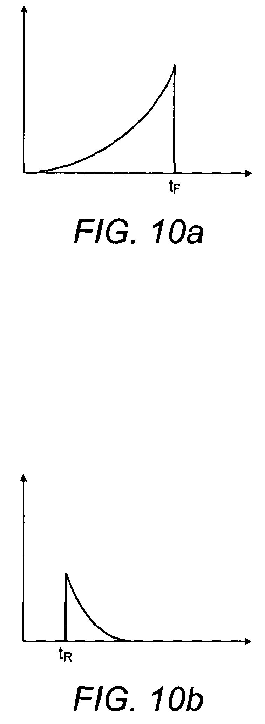

Firstly, the vehicle 90a is shown at a location where the maximum headlight intensity will be detected by the road stud 10. The detected headlight intensity profile is shown in Figure 10a. The road stud 10 may record the time $t_F$ at which the maximum headlight intensity is observed. This occurs just as the front of the vehicle 90a passes over the road stud 10.

Secondly, the vehicle 90b is shown at a location where the maximum rearlight intensity will be detected by the road stud 10. The detected rearlight intensity profile is shown in Figure 10b. The road stud 10 may record the time $t_R$ at which the maximum rearlight intensity is observed. This occurs just as the back of the vehicle 90b passes over the road stud 10.

The length of the vehicle may then be calculated as $v(t_R - t_F)$. If the front and rear vehicle lights are detected by different sensors which are spaced apart on the road stud, then this distance apart can to be subtracted from the calculated length of the vehicle for a more accurate determination of vehicle length if required.

Based upon the calculated vehicle length, it is possible to infer the type of vehicle. Such information may be logged by the road stud, or passed off-road for logging.

## (e) Method of road stud power reduction by distributed sensing and processing

When communications are established between road studs, any sensing functions can be combined between groups of studs, thereby sharing the power requirements for the whole site. The time between each microprocessor 30 taking measurements can also be extended, thereby saving power. In addition, if one road stud 10 is found to be particularly low on power, whilst surrounding road studs have a good power supply, then the low-power road stud could be put into an "emergency" state so as to perform only essential processing and light emission.

Detection of rain and fog

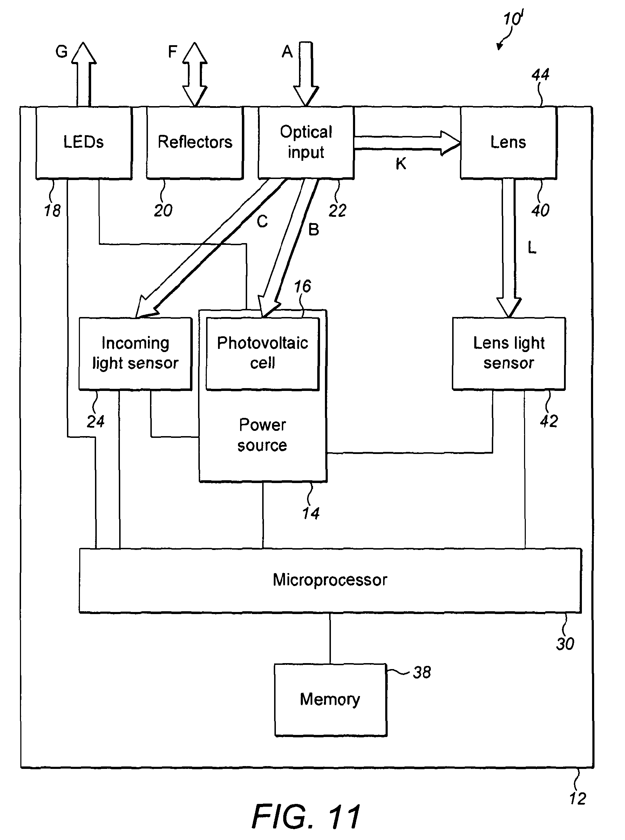

The road stud described herein may also comprise a lens which is not shown in Figure 1 for simplicity. Instead, Figure 11 shows a road stud 10' including the lens 40 and an associated lens light sensor 42, but excluding the elements of the road stud communication system (i.e. the reflector 26, the piezoelectric element 28, the optical communication output 32, the optical communication input 34, and the optical communication light sensor 36). However, it will be appreciated that a road stud 10 or 10' could comprise the lens 40 and the associated lens light sensor 42 in addition to the elements of the road stud communication system.

As mentioned previously, the optical input 22 directs incoming light (see arrow A) towards the light sensor 24 (see arrow C), the photovoltaic cell 16 (see arrow B) and/or the reflector 26 (see arrow D). In addition, the optical input 22 may be arranged to receive incoming light (see arrow A) from a vehicle on the road surface and to direct at least some of the incoming light towards the lens 40 (see arrow K).

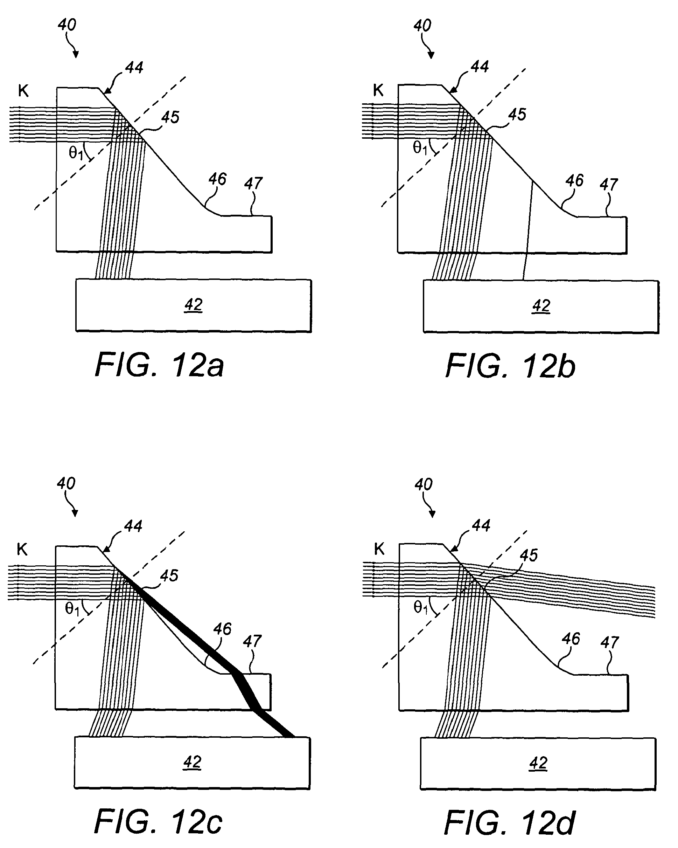

The lens 40 has a lens surface 44 which defines an interface between the lens 40 and an external environment of the road stud 10' (i.e. the air/atmosphere outside the road stud). The geometry of the lens surface 44 is shown in Figure 12. The lens surface 44 comprises a first flat portion 45, a curved portion 46 and a second flat portion 47. The curved portion 46 is slightly concave and is disposed between the first and second flat portions 45 and 47. The first and second flat portions 45 and 47 are angled with respect to each other.

The light from the optical input 22 is arranged to pass through the lens 40 along a predetermined path so as to meet the lens surface 44 at the first flat portion 45. The predetermined path is arranged at a predetermined angle $\theta_1$ to the normal to the first flat portion 45 of the lens surface 44. The incoming light along the predetermined path is reflected and/or refracted at the lens surface 44. The lens light sensor 42 is disposed to sense reflected and/or refracted light from the lens surface 44. The lens light sensor 42 is powered by the power source 14 if necessary. The lens light sensor 42 outputs sensed light data to the microprocessor 30.

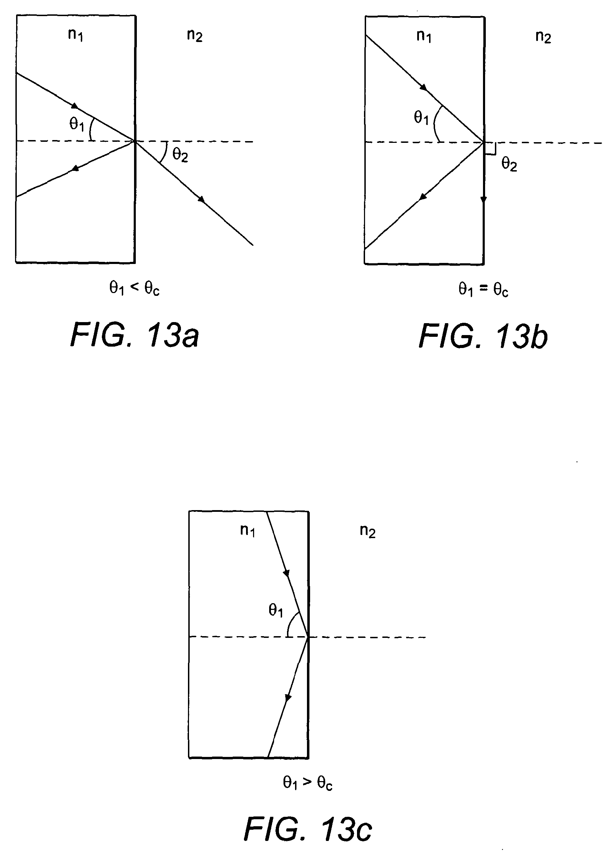

Consider a surface (e.g. the lens surface 44) which marks a boundary between two areas of different refractive index. Snell's law states that $n_1 \sin \theta_1 = n_2 \sin \theta_2$, where $\theta_1$ is the angle of the incident ray with respect of the normal at the surface, $\theta_2$ is the angle of the refracted (i.e. transmitted) ray with respect to the normal at the surface, $n_1$ is the refractive index of the medium through which the incident ray passes, and $n_2$ is the refractive index of the medium through which the refracted ray passes. Consider $n_1 > n_2$ (as for the light ray approaching the lens surface 44 along the predetermined path). The so-called "critical angle" $\theta_c$ is the angle of incidence $\theta_1$ for which the refracted ray is parallel to the surface (i.e. $\theta_2 = 90°$) so $\theta_c = \sin^{-1}(n_2/n_1)$. This situation is shown in Figure 13b. Figure 13a shows the reflected and refracted light rays when $\theta_1 < \theta_c$, and Figure 13c shows total internal reflection (TIR) which occurs when $\theta_1 > \theta_c$.

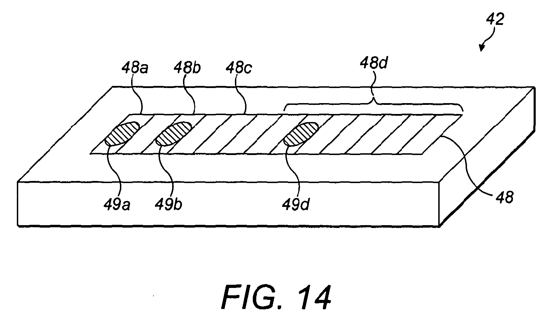

Figure 14 shows an example of a lens light sensor 42 having a detection region 48 made up from a plurality of detection areas 48a, 48b, 48c and 48d. Thus, the lens light sensor 42 is able to distinguish between light detected in detection area 48b and light detected in detection area 48c, for example. Thus, the sensed light data from the lens light sensor 42 includes information about the location of the sensed light. A first detection area 48a is a control detection area arranged to receive a portion of the incoming light so as to normalise any reflected/refracted light measurements. A second detection area 48b is arranged to receive light reflected from the lens surface 44. A third detection area 48c is arranged to receive light which has been refracted along the lens surface 44 when $\theta_1 = \theta_c$. A fourth detection area 48d includes a number of discrete detection areas arranged to receive light refracted into the external environment by the lens surface 44. The discrete detection areas enable the angle of refraction to be inferred. In Figure 14, an example is shown whereby three separate light signals 49a, 49b and 49d have been detected by the lens light sensor 42.

Reflections from an inner face (not shown) of the lens 40 may be used as the control (i.e. reference) to indicate the amount of light being input into the lens 40. These "control" reflections may be directed towards the control detection area 48a of the lens light sensor 42 and then used to normalise any detected reflected/refracted light. Alternatively, the incoming light sensor 24 may be used as a control to indicate the amount of incoming light for normalisation purposes.

If the angle of incidence $\theta_1$ is set up appropriately, and the refractive index $n_2$ of the external environment is sufficiently low, there will be total internal reflection (as shown in Figure 12a). This will result in a large amount of reflected light being detected by the reflection detection area 48b of the lens light sensor 42. There should be no light detected by the critical detection area 48c or by the refraction detection areas 48d.

For the same angle of incidence $\theta_1$, if the refractive index $n_2$ of the external environment is somewhat higher, the "critical angle" situation shown in Figure 12B may occur. In this case, some light will be refracted along the first flat portion 45 of the lens surface 44 until it reaches the curved portion 46 of the lens surface 44. At this point, the refracted ray will be diverted back into the lens 40 by the curved portion 46 of the lens surface 44. This will result in a reduced amount of reflected light being detected by the reflection detection area 48b of the lens light sensor 42 since some of the light will have been transmitted (i.e. refracted) rather than reflected. In addition, the refracted light beam will be detected by the critical detection area 48c of the lens light sensor 42.

For the same angle of incidence $\theta_1$, if the refractive index $n_2$ of the external environment is increased again, some of the light will be refracted into the external environment as shown in Figure 12c. The lens surface 44 of the lens 40 is designed such that the refracted light will be directed towards the second flat portion 47 of the lens 40 so as to re-enter the lens 40. Again, a reduced amount of reflected light will be detected by the reflection detection area 48b of the lens light sensor 42 since some of the light will have been transmitted (i.e. refracted) rather than reflected. In addition, the refracted light beam will be detected by the one or more of the refraction detection areas 48d of the lens light sensor 42. This is the exemplary situation shown by the detected light 49 in Figure 14.

For the same angle of incidence $\theta_1$, if the refractive index $n_2$ of the external environment is increased yet again, the angle $\theta_2$, of the refracted beam to the normal to the first flat portion of the lens surface 44 is reduced such that the refracted beam no longer meets the second flat portion 47 of the lens surface 44. This situation is shown in Figure 12d. Again, a reduced amount of reflected light will be detected by the reflection detection area 48b of the lens light sensor 42 since some of the light will have been transmitted (i.e. refracted) rather than reflected. The refracted light beam will no longer be detected by the refraction detection areas 48d of the lens light sensor 42 since the light has not been refracted through a sufficiently large angle to be directed towards the lens light sensor 42.

Hence, based on the amount and spatial distribution of light detected by the lens light sensor 42, the road stud 10' provides information about the refractive index $n_2$ of the external environment. Since the refractive index $n_2$ of the external environment will increase with the moisture content of the atmosphere, this refractive index information can be used to infer information about the moisture content of the external environment. For example, if there is a lot of detected reflected light, then there is TIR, so $n_2$ is relatively low, so the moisture content of external environment/atmosphere is relative low. In contrast, if there is less reflected light, then there is partial transmission through the lens surface 44, so $n_2$ is higher, so the moisture content of external environment/atmosphere is higher. Thus, the lens 40 and associated lens light sensor potentially make it possible to detect rain and/or fog using the road stud 10'.

The angle of incidence $\theta_1$ should be chosen to ensure that there is total internal reflection when there is no moisture in the atmosphere. However, in this no-moisture situation, the angle of incidence should be relatively close to the critical angle $\theta_c$ such that there is a significant change in the amount of reflected light as the moisture content of the atmosphere increases. The angle of incidence $\theta_1$ may be chosen to be equal to the critical angle $\theta_c$ for a particular threshold level of refractive index of the external environment (e.g. the refractive index when fog is present). In this embodiment, the detector can be used to accurately detect binary "fog / no fog" conditions of the external atmosphere.

Thus, the above-described optical rain and fog detection method works on the refractive index of the lesser medium (in this case, air) changing with the density of water contained in the atmosphere. The measurement of this water content is taken from within the road stud and no external sensors are required to determine the result. The only power required to use the detection method is power for the microprocessor 30 and the lens light sensor 42. Thus, relatively little energy is used.

In order to ensure that the reflected and refracted light detected by the lens light sensor 42 may be differentiated from other possible light sources, the light approaching the lens surface 44 via the predetermined path may include a digital signal (which could be produced using the reflector 26 and piezoelectric element 28 as described above with respect to the road stud communication method).

Although preferred embodiments of the invention have been described, it is to be understood that these are by way of example only and that various modifications may be contemplated within the scope of the appended claims.

## Claims

1. A road stud (10) for disposal in a road surface (92), the road stud comprising:

   an optical input (22) for receiving incoming light (A) from a vehicle on the road surface;
   an optical output (32) for directing light (H) out of the road stud in a predetermined output direction;
   a light modification component (26) operable to modify incoming light as it passes along a light path (D, E) from the optical input to the optical output;
   a microprocessor (30) operable to control the light modification component, thereby enabling the road stud to send an outgoing optical communication signal in the predetermined output direction when the road stud is illuminated by incoming light from a vehicle. 15

2. The road stud of claim 1 wherein the light modification component is an interrupt component operable to alternately prevent and allow the passage of incoming light along the light path from the optical input to the optical output, thereby enabling the road stud to send a digital optical communication signal in the predetermined output direction.

3. The road stud of claim 2 wherein the interrupt component comprises a piezoelectric element (28) coupled to an optical element disposed in the light path, the piezoelectric element being operable to move the optical element in response to electrical signals from the microprocessor, the optical element being moveable to alternately prevent and allow the passage of incoming light along the light path from the optical input to the optical output.

4. The road stud of any of claims 1 to 3 wherein the road stud further comprises a light sensor (24) arranged to sense an incoming optical communication signal.

5. The road stud of claim 4 wherein the road stud is arranged to receive the incoming optical communication signal from a predetermined input direction.

6. The road stud of claim 5 wherein the predetermined input direction is substantially coincident with the predetermined output direction.

7. The road stud of any of claims 1 to 6 wherein the road stud comprises a plurality of optical inputs for receiving incoming light from vehicles on the road surface.

8. The road stud of any of claims 1 to 7 wherein the road stud comprises a plurality of optical outputs for directing light out of the road stud in a plurality of respective predetermined output directions.

9. The road stud of any of claims 4 to 6 wherein the light sensor comprises one of a photodiode, a phototransistor, a photoresistor, and a solar/photovoltaic cell (16).

10. The road stud of any of claims 1 to 9 further comprising a power supply (14).

11. The road stud of any of claims 1 to 10 further comprising a data storage device (38).

**Patentansprüche**

1. Straßennagel (10) zur Anordnung in einer Straßenoberfläche (92), wobei der Straßennagel Folgendes aufweist:

einen optischen Eingang (22) zum Empfangen von einfallendem Licht (A) von einem Fahrzeug auf der Straßenoberfläche;
einen optischen Ausgang (32) zum Leiten von Licht (H) aus dem Straßennagel in eine vorgegebene Ausgangsrichtung;
ein Lichtmodifikationsbauteil (26), das dazu betriebsbereit ist, einfallendes Licht zu modifizieren, während es entlang eines Lichtpfads (D, E) von dem optischen Eingang zu dem optischen Ausgang verläuft;

einen Mikroprozessor (30), der dazu betriebsbereit ist, das Lichtmodifikationsbauteil zu steuern, wodurch ermöglicht wird, dass der Straßennagel ein ausgehendes optisches Kommunikationssignal in die vorgegebene Ausgangsrichtung sendet, wenn der Straßennagel durch einfallendes Licht von einem Fahrzeug angestrahlt wird.

2. Straßennagel nach Anspruch 1, wobei das Lichtmodifikationsbauteil ein Unterbrechungsbauteil ist, das dazu betriebsbereit ist, den Durchlass von einfallendem Licht entlang des Lichtpfads von dem optischen Eingang zum optischen Ausgang abwechselnd zu verhindern und zu ermöglichen, wodurch ermöglicht wird, dass der Straßennagel ein digitales optisches Kommunikationssignal in die vorgegebene Ausgangsrichtung sendet.

3. Straßennagel nach Anspruch 2, wobei das Unterbrechungsbauteil ein piezoelektrisches Element (28) aufweist, das mit einem in dem Lichtpfad angeordneten optischen Element verbunden ist, wobei das piezoelektrische Element dazu betriebsbereit ist, das optische Element ansprechend auf elektrische Signale von dem Mikroprozessor zu bewegen, wobei das optische Element beweglich ist, um den Durchlass von einfallendem Licht entlang des Lichtpfads von dem optischen Eingang zum optischen Ausgang abwechselnd zu verhindern und zu erlauben.

4. Straßennagel nach einem der Ansprüche 1 bis 3, wobei der Straßennagel ferner einen Lichtsensor (24) aufweist, der dazu ausgestaltet ist, ein eingehendes optisches Kommunikationssignal abzutasten.

5. Straßennagel nach Anspruch 4, wobei der Straßennagel dazu ausgestaltet ist, das eingehende optische Kommunikationssignal aus einer vorgegebenen Eingangsrichtung zu empfangen.

6. Straßennagel nach Anspruch 5, wobei die vorgegebene Eingangsrichtung im Wesentlichen mit der vorgegebenen Ausgangsrichtung übereinstimmt.

7. Straßennagel nach einem der Ansprüche 1 bis 6, wobei der Straßennagel eine Mehrzahl von optischen Eingängen zum Empfangen von einfallendem Licht von Fahrzeugen auf der Straßenoberfläche aufweist.

8. Straßennagel nach einem der Ansprüche 1 bis 7, wobei der Straßennagel eine Mehrzahl von optischen Ausgängen zum Leiten von Licht aus dem Straßennagel in eine Mehrzahl von entsprechenden vorgegebenen Ausgangsrichtungen aufweist.

**9.** Straßennagel nach einem der Ansprüche 4 bis 6, wobei der Lichtsensor entweder eine Photodiode, einen Phototransistor, einen Photowiderstand oder eine Solar-/Photovoltaikzelle (16) aufweist.

**10.** Straßennagel nach einem der Ansprüche 1 bis 9, der ferner eine Stromversorgung (14) aufweist.

**11.** Straßennagel nach einem der Ansprüche 1 bis 10, der ferner eine Datenspeichervorrichtung (38) aufweist.

## Revendications

**1.** Plot routier (10) destiné à être disposé dans une surface routière (92), le plot routier comprenant :

une entrée optique (22) pour recevoir une lumière entrante (A) provenant d'un véhicule sur la surface routière ;
une sortie optique (32) pour diriger une lumière (H) hors du plot routier dans une direction de sortie prédéterminée ;
un composant de modification de lumière (26) pouvant fonctionner pour modifier une lumière entrante lorsqu'elle passe le long d'un trajet de lumière (D, E) de l'entrée optique à la sortie optique ;
un microprocesseur (30) pouvant fonctionner pour commander le composant de modification de lumière, permettant ainsi au plot routier d'envoyer un signal de communication optique sortant dans la direction de sortie prédéterminée lorsque le plot routier est éclairé par une lumière entrante provenant d'un véhicule.

**2.** Plot routier de la revendication 1, dans lequel le composant de modification de lumière est un composant d'interruption pouvant fonctionner pour empêcher et permettre de manière alternée le passage d'une lumière entrante le long du trajet de lumière de l'entrée optique à la sortie optique, permettant ainsi au plot routier d'envoyer un signal de communication optique numérique dans la direction de sortie prédéterminée.

**3.** Plot routier de la revendication 2, dans lequel le composant d'interruption comprend un élément piézoélectrique (28) couplé à un élément optique disposé dans le trajet de lumière, l'élément piézoélectrique pouvant fonctionner pour déplacer l'élément optique en réponse à des signaux électriques provenant du microprocesseur, l'élément optique étant mobile pour empêcher et permettre de manière alternée le passage d'une lumière entrante le long du trajet de lumière de l'entrée optique à la sortie optique.

**4.** Plot routier de l'une des revendications 1 à 3, dans lequel le plot routier comprend en outre un capteur de lumière (24) agencé pour détecter un signal de communication optique entrant.

**5.** Plot routier de la revendication 4, dans lequel le plot routier est agencé pour recevoir le signal de communication optique entrant provenant d'une direction d'entrée prédéterminée.

**6.** Plot routier de la revendication 5, dans lequel la direction d'entrée prédéterminée coïncide essentiellement avec la direction de sortie prédéterminée.

**7.** Plot routier de l'une des revendications 1 à 6, dans lequel le plot routier comprend une pluralité d'entrées optiques pour recevoir une lumière entrante provenant de véhicules sur la surface routière.

**8.** Plot routier de l'une des revendications 1 à 7, dans lequel le plot routier comprend une pluralité de sorties optiques pour diriger la lumière hors du plot routier dans une pluralité de directions de sortie prédéterminées respectives.

**9.** Plot routier de l'une des revendications 4 à 6, dans lequel le capteur de lumière comprend l'un(e) d'une photodiode, d'un phototransistor, d'une photorésistance et d'une cellule solaire/photovoltaïque (16).

**10.** Plot routier de l'une des revendications 1 à 9, comprenant en outre une source d'alimentation (14).

**11.** Plot routier de l'une des revendications 1 à 10, comprenant en outre un dispositif de stockage de données (38) .

FIG. 1

Headlight
intensity of a
passing car,
from the
point of view
of a road
stud

Δt

t₀    Time

## FIG. 2

50

72

Q

62b

60

62

68    R

R

S

P

52

78

64

P

70

64b

R

74    Q

## FIG. 3

*80*

*82*

*86*    *84*

## FIG. 4

*18'*

*26a*    *26b*

A'    E'

G'    G'

## FIG. 5

FIG. 6

FIG. 7a

FIG. 7b

**FIG. 8**

**FIG. 9**

FIG. 10a

FIG. 10b

*FIG. 11*

FIG. 12a

FIG. 12b

FIG. 12c

FIG. 12d

$n_1$      $n_2$

$\theta_1$

$\theta_2$

$\theta_1 < \theta_c$

## FIG. 13a

$n_1$      $n_2$

$\theta_1$

$\theta_2$

$\theta_1 = \theta_c$

## FIG. 13b

$n_1$      $n_2$

$\theta_1$

$\theta_1 > \theta_c$

## FIG. 13c

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0578413 A

- JP 2009009604 A